# EUROPÄISCHE PATENTANMELDUNG

(11) **EP 4 484 109 A1**
(43) Veröffentlichungstag der Anmeldung: **01.01.2025**
(21) Anmeldenummer: 24183842.4
(22) Anmeldetag: 21.06.2024
(51) Int. Cl.: B29C 33/56, B29C 33/42, B29C 45/37

(54) **VERFAHREN ZUM HERSTELLEN EINES FORMWERKZEUGS, FORMWERKZEUG UND FORMTEIL**

(30) Priorität: 30.06.2023 DE 102023206206
(71) Anmelder: Faurecia Innenraum Systeme GmbH, 76767 Hagenbach (DE)
(72) Erfinder: KLOS, Jochen, 76185 Karlsruhe (DE); SCHERER-EURICH, Alfred, 74196 Neuenstadt (DE); ROCH, Alexander Thomas, 67363 Lustad (DE)
(74) Vertreter: Pfenning, Meinig & Partner mbB

(57) **Zusammenfassung**

Die Anmeldung betrifft ein Verfahren zum Herstellen eines Formwerkzeugs (100) zum Formen eines Formteils (200), insbesondere eines Formwerkzeugs (100) für eine Spritzguss-Vorrichtung, wobei das Verfahren umfasst: Bereitstellen einer ersten Komponente (110) des Formwerkzeugs (100) mit einer ersten Oberfläche (111), die zum Formen eines ersten Bereichs (210) des Formteils (200) eingerichtet ist, und einer zweiten Komponente (120) des Formwerkzeugs (100) mit einer zweiten Oberfläche (121), die zum Formen eines zweiten Bereichs (220) des Formteils (200) eingerichtet ist, Zusammenfügen der ersten Komponente (110) und der zweiten Komponente (120), so dass ein Grenzbereich (130) zwischen der ersten Oberfläche (111) und der zweiten Oberfläche (121) ausgebildet wird, Aufbringen einer Beschichtung (140) auf die erste und die zweite Oberfläche (111, 121), so dass der Grenzbereich (130) von der Beschichtung (140) überdeckt ist, Durchtrennen der Beschichtung (140) entlang des Grenzbereichs (130).

## Beschreibung

Die Anmeldung betrifft ein Verfahren zum Herstellen eines Formwerkzeugs, ein entsprechendes Formwerkzeug und ein damit herstellbares Formteil. Das Verfahren kann mit Vorteil auf dem Gebiet der Fertigungstechnik, insbesondere im Spritzguss, eingesetzt werden. Das Formwerkzeug eignet sich beispielsweise für die Herstellung von Fahrzeugkomponenten als Formteilen, insbesondere mittels eines Spritzguss-Verfahrens.

Mittels Spritzguss-Verfahren werden Formteile aus verschiedenen Materialien, etwa Kunststoffen, und für verschiedenste Einsatzzwecke hergestellt. Beispielsweise kommen in Fahrzeugen zahlreiche mittels Spritzguss-Verfahren hergestellte Kunststoff-Formteile zum Einsatz, unter anderem als strukturelle Komponenten oder Verblendungen/Verkleidungen von Armaturenbrettern, Konsolen, Tür- oder Dachmodulen oder als Bedienelemente. Häufig weisen solche Formteile strukturierte Oberflächen, beispielsweise in Form von Körnungen oder lederähnlichen Strukturen, auf.

Prinzipbedingt bestehen Formwerkzeuge für Spritzguss-Vorrichtungen aus mehreren Komponenten, die für den Einspritzvorgang zusammengefügt und in einer Schließeinheit zusammengehalten werden. Im Bereich der dabei bestehenden Grenzbereiche zwischen den Komponenten können sichtbare Linienartefakte, sogenannte Trennlinien, an dem hergestellten Formteil auftreten, wenn die Komponenten an den Grenzbereiche nicht genau miteinander abschließen.

Solche Linienartefakte können insbesondere beim Einsatz von beschichteten Formwerkzeug-Komponenten auftreten. Hierbei umfasst die zum Formen des Formteils eingerichtete Oberfläche der Komponenten eine Beschichtung, beispielsweise eine keramische Beschichtung, die etwa das Formwerkzeug schützen, das Entformen erleichtern sowie ein Aufbringen von Oberflächenstrukturen (durch entsprechende Strukturierung der Beschichtung) auf das Formteil ermöglichen kann. Grenzbereiche zwischen den Beschichtungen aneinander angrenzender Formteil-Komponenten können in vielen Fällen nicht mit hinreichend geringen Toleranzen ausgelegt werden, um entsprechende Linienartefakte am Formteil zu vermeiden. Dies kann in besonderem Maße gelten, wenn die Beschichtung eine strukturierte Oberfläche aufweist, da in diesem Fall Kantenlinien der Oberflächenstrukturen beidseitig des Grenzbereichs nur schwer aneinander anpassbar sein können.

Vor dem Hintergrund des Stands der Technik liegt der Anmeldung die Aufgabe zugrunde, ein Verfahren zur Herstellung eines Formwerkzeugs sowie ein Formwerkzeug vorzuschlagen, die eine Fertigung von Formteilen mit keinen oder möglichst geringen Linienartefakten im Bereich von Grenzbereiche zwischen beschichteten Formwerkzeug-Komponenten ermöglichen. Auch ein entsprechendes Formteil soll vorgeschlagen werden.

Zur Lösung der Aufgabe werden ein Verfahren gemäß Anspruch 1, ein Formwerkzeug gemäß Anspruch 9, ein Formwerkzeug gemäß Anspruch 10 und ein Formteil gemäß Anspruch 11 vorgeschlagen. Vorteilhafte Ausgestaltungen und Weiterbildungen ergeben sich in Verbindung mit den Merkmalen der Unteransprüche.

Das vorgeschlagene Verfahren zum Herstellen eines Formwerkzeugs zum Formen eines Formteils, insbesondere eines Formwerkzeugs für eine Spritzguss-Vorrichtung, umfasst:
Bereitstellen einer ersten Komponente des Formwerkzeugs mit einer ersten Oberfläche, die zum Formen eines ersten Bereichs des Formteils eingerichtet ist, und einer zweiten Komponente des Formwerkzeugs mit einer zweiten Oberfläche, die zum Formen eines zweiten Bereichs des Formteils eingerichtet ist,
Zusammenfügen der ersten Komponente und der zweiten Komponente, so dass ein Grenzbereich zwischen der ersten Oberfläche und der zweiten Oberfläche ausgebildet wird,
Aufbringen einer Beschichtung auf die erste Oberfläche und die zweite Oberfläche, so dass der Grenzbereich von der Beschichtung überdeckt ist,
Durchtrennen der Beschichtung entlang des Grenzbereichs.

Indem die Beschichtung nicht einzeln auf die (getrennte) erste und zweite Komponente, sondern auf die aneinander angrenzend angeordneten Komponenten aufgebracht und in dieser Anordnung durchtrennt wird, kann eine Toleranz bzw. Abweichung zwischen den Konturen der Beschichtung im Bereich des Grenzbereichs verbessert und somit das Auftreten von unerwünschten Linienartefakten an den gefertigten Formteilen verringert oder vermieden werden.

Die Beschichtung kann ein keramisches Material umfassen oder aus diesem bestehen. Insbesondere kann die Beschichtung einen Keramik-Kunstharz-Verbundwerkstoff umfassen oder aus diesem bestehen. Auch andere Beschichtungsmaterialien können verwendet werden. Durch Verwendung einer keramischen Beschichtung kann etwa das Formwerkzeug (z. B. gegen Korrosion) geschützt, das Entformen erleichtert und/oder (bei Verwendung einer strukturierten Beschichtung) ein Einbringen von Oberflächenstrukturen auf das Formteil ermöglicht werden. Das keramische Material kann beispielsweise durch thermisches Spritzen, Gasphasenabscheidung oder einen anderen Depositionsprozess auf die erste und zweite Oberfläche aufgebracht werden. Die erste Komponente und die zweite Komponente, oder jedenfalls dem Formteil zugewandte Bereiche der ersten und zweiten Komponente, bestehen vorzugsweise aus einem metallischen Werkstoff.

Das Durchtrennen der Beschichtung kann mittels eines gepulsten Lasers erfolgen, wobei eine Pulsdauer eines Betriebs des gepulsten Lasers vorzugsweise im Bereich von 1 fs bis 1 ps liegt (Ultrakurzpulslaser). Die Verwendung eines Lasers dieser Art ermöglich ein präzises Durchtrennen, wobei eine in das Material eingetragene Laserleistung so gewählt sein kann, dass nur die Beschichtung durchtrennt, nicht aber ein Material der ersten bzw. zweiten Komponente beschädigt wird.

Das Verfahren kann ein Einbringen einer Oberflächenstruktur, umfassend vertiefte Bereiche und relativ zu den vertieften Bereichen erhabene Bereiche, in die Beschichtung umfassen. Die vertieften und erhabenen Bereiche können abwechselnd nebeneinander angeordnet sein. Mittels einer strukturierten Oberflächen der Beschichtung können Formteile mit entsprechend (invertiert bzw. negativ) strukturierter Oberfläche gefertigt werden, was eine ansprechende Erscheinung, gute Haptik und Handhabung und/oder praktische Vorteile (z. B. relative Unempfindlichkeit gegenüber Verschmutzungen) mit sich bringen kann. In den vertieften Bereichen kann die Beschichtung teilweise oder ganz (also mit Freiliegen der darunterliegenden Oberfläche der jeweiligen Komponente) abgetragen sein.

Die Oberflächenstruktur kann beispielsweise eine Körnung und/oder eine lederähnliche Struktur umfassen. Andere Oberflächenstrukturen sind ebenfalls möglich, beispielsweise netz- oder wabenartige Strukturen.

Die Oberflächenstruktur kann mittels eines gepulsten Lasers in die Beschichtung eingebracht werden. Insbesondere können das Durchtrennen der Beschichtung und das Einbringen der Oberflächenstruktur mittels desselben gepulsten Lasers erfolgen. Beide Arbeitsschritte können so vorteilhaft in einem gemeinsamen laserbasierten Arbeitsgang vereinigt werden. Die beiden Arbeitsschritte können jedoch auch getrennt erfolgen, etwa wenn die Komponenten zum Einbringen der Oberflächenstruktur anders relativ zum Laser orientiert sein sollen als zum Durchtrennen. Die Oberflächenstruktur kann alternativ mittels eines anderen Verfahrens, etwa durch Fräsen, Ätzen oder Sandstrahlen, oder durch eine Kombination verschiedener Verfahren in die Beschichtung eingebracht werden.

Ein mittels des vorgeschlagenen Verfahrens hergestelltes Formwerkzeug weist die oben genannten Vorteile auf, eignet sich also insbesondere zum Herstellen von Formteilen ohne Linienartefakte bzw. mit nur minimalen Linienartefakten.

Weiterhin wird ein Formwerkzeug zum Formen eines Formteils, insbesondere Formwerkzeug für eine Spritzguss-Vorrichtung, vorgeschlagen, wobei das Formwerkzeug umfasst:
eine erste Komponente mit einer ersten Oberfläche, die zum Formen eines ersten Bereichs des Formteils eingerichtet ist, und einer auf die erste Oberfläche aufgebrachten ersten Beschichtung,
eine zweite Komponente mit einer zweiten Oberfläche, die zum Formen eines zweiten Bereichs des Formteils eingerichtet ist, und einer auf die zweite Oberfläche aufgebrachten zweiten Beschichtung,
wobei die erste Komponente und die zweite Komponente zum Formen des Formteils zusammenfügbar sind, so dass zwischen der ersten Beschichtung und der zweiten Beschichtung ein Grenzbereich ausgebildet wird.

Es ist vorgesehen, dass ein Abstand zwischen der ersten Beschichtung und der zweiten Beschichtung überall im Grenzbereich, insbesondere jeder Abstand zwischen je einem ersten Punkt einer Kantenlinie der ersten Beschichtung im Grenzbereich und einem dem ersten Punkt am nächsten liegenden zweiten Punkt einer Kantenlinie der zweiten Beschichtung im Grenzbereich, nicht mehr als 100 µm, vorzugsweise nicht mehr als 20 µm, insbesondere nicht mehr als 10 µm beträgt. Unter einer Kantenlinie wird dabei die durch das Durchtrennen entstandene, von der Oberfläche der jeweiligen Komponente des Formwerkzeugs beabstandete Linie am Rand der Oberfläche der Beschichtung verstanden.

Ein so geringer Abstand zwischen der ersten und zweiten Beschichtung im Grenzbereich kann zu einem entsprechend gering ausgeprägtem bzw. sogar unbemerkbarem Linienartefakt am hergestellten Formteil führen und ist insbesondere mittels des vorgeschlagenen Verfahrens erzielbar.

Ein anmeldungsgemäßes Formteil kann unter Verwendung eines der vorgeschlagenen Formwerkzeuge hergestellt werden, insbesondere als Spritzguss-Formteil. Ein solches Formteil kann insbesondere ein Fahrzeugteil, etwa eine strukturelle Komponenten oder eine Verblendung/Verkleidung für ein Armaturenbrett, eine Konsole, ein Tür- oder Dachmodul, oder ein Bedienelement sein.

Ausführungsbeispiele des Anmeldungsgegenstandes werden nachfolgend mit Bezugnahme auf Zeichnungen erläutert. Dabei zeigen, jeweils schematisch,
Fig. 1 und Fig. 2 einen Teil eines Formwerkzeugs nach verschiedenen Schritten eines Verfahrens zum Herstellen des Formwerkzeugs,
Fig. 2 ferner ein Formteil,
Fig. 3 ein Detail des Formwerkzeugs nach Fig. 1 und Fig. 2.

Wiederkehrende und ähnliche Merkmale sind in den Zeichnungen mit identischen alphanumerischen Bezugszeichen versehen. Bereits in anderen Zeichnungen gezeigte Bezugszeichen werden teilweise ausgelassen.

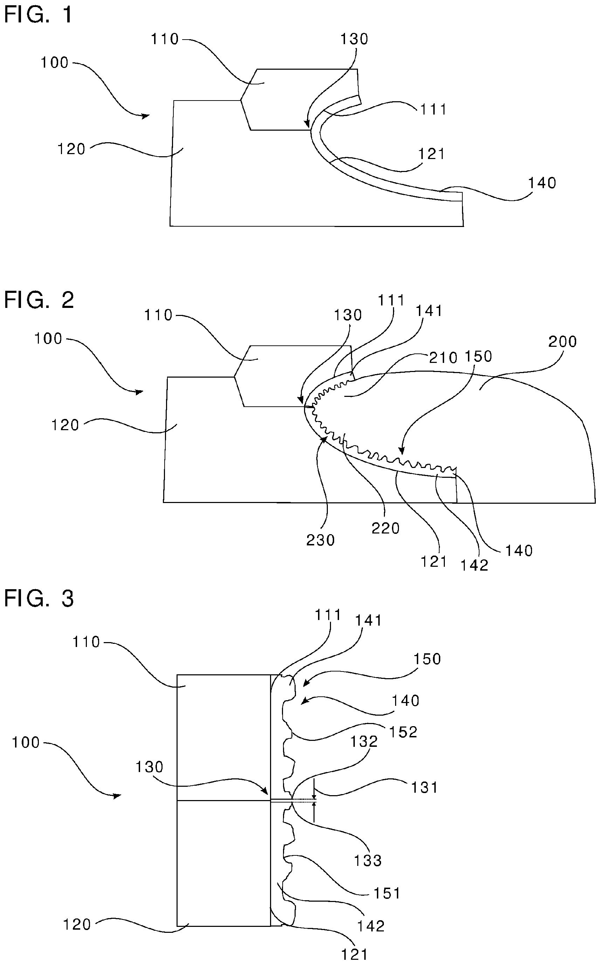

Fig. 1 und Fig. 2 illustrieren ein Verfahren zum Herstellen eines Formwerkzeugs 100 für eine Spritzguss-Vorrichtung. Das Formwerkzeug umfasst eine erste Komponente 110 mit einer ersten Oberfläche 111 und eine zweite Komponente 120 mit einer zweiten Oberfläche 121. Die erste Komponente 110 ist zum Formen eines ersten Bereichs 210 des Formteils 200 eingerichtet, die zweite Komponente 120 ist zum Formen eines zweiten Bereichs 220 des Formteils 200 eingerichtet. Fig. 1 und Fig. 2 zeigen nur einen Teil des Formwerkzeugs 100, der zum Formen eines Teils des Formteils 200 mit einer strukturierten Oberfläche eingerichtet ist; weitere Teile des Formwerkzeugs, die zum Formen weiterer Teile des Formteils 200 eingerichtet sind, sind ausgelassen.

Ein erster Schritt des Verfahrens umfasst ein Bereitstellen der ersten Komponente 110 und der zweiten Komponente 120. Die erste Komponente 110 und die zweite Komponente 120 bestehen aus einem metallischen Werkstoff.

Ein zweiter Schritt des Verfahrens umfasst ein Zusammenfügen der ersten Komponente 110 und der zweiten Komponente 120, so dass ein Grenzbereich 130 zwischen der ersten Oberfläche 111 und der zweiten Oberfläche 121 ausgebildet wird. Fig. 3 zeigt eine detailliertere Ansicht der ersten Komponente 110 und der zweiten Komponente 120 in einer Umgebung des Grenzbereichs 130.

Ein dritter Schritt des Verfahrens umfasst ein Aufbringen einer Beschichtung 140 auf die erste Oberfläche 111 und die zweite Oberfläche 121, so dass der Grenzbereich 130 von der Beschichtung 140 überdeckt ist. Fig. 1 zeigt das teilweise hergestellte Formwerkzeug 100 im Anschluss an den dritten Schritt des Verfahrens.

Die Beschichtung 140 besteht aus einem Keramik-Kunstharz-Verbundwerkstoff; andere geeignete Materialien, insbesondere keramische Materialien, können alternativ verwendet werden. Das keramische Material wird durch thermisches Spritzen, Gasphasenabscheidung oder einen anderen Depositionsprozess auf die erste Oberfläche 111 und die zweite Oberfläche 121 aufgebracht.

Ein vierter Schritt des Verfahrens umfasst ein Einbringen einer Oberflächenstruktur 150, umfassend vertiefte Bereiche 151 und relativ zu den vertieften Bereichen erhabene Bereiche 152 (zu erkennen in Fig. 3), in die Beschichtung 140. Mittels der Oberflächenstruktur 150 der Beschichtung 140 wird das Formteil 200 beim Formen mit entsprechend (invertiert bzw. negativ) strukturierter Formteiloberfläche 230 gefertigt. Die Oberflächenstruktur 150 umfasst eine Körnung. Die Oberflächenstruktur 150 kann alternativ etwa eine lederähnliche Struktur oder netz- oder wabenartige Strukturen umfassen.

Die Oberflächenstruktur 150 wird mittels eines gepulsten Lasers in die Beschichtung eingebracht, wobei eine Pulsdauer eines Betriebs des gepulsten Lasers vorzugsweise im Bereich von 1 fs bis 1 ps liegt (Ultrakurzpulslaser). Alternativ kann die Oberflächenstruktur 150 mittels eines anderen Verfahrens, etwa durch Fräsen, Ätzen oder Sandstrahlen, oder durch eine Kombination verschiedener Verfahren in die Beschichtung eingebracht werden.

Ein fünfter Schritt des Verfahrens umfasst ein Durchtrennen der Beschichtung 140 entlang des Grenzbereichs 130. Fig. 2 zeigt das hergestellte Formwerkzeug 100 im Anschluss an den fünften Schritt des Verfahrens, wobei die erste Komponente 110 und die zweite Komponente 120 zum Formen des Formteils 200 durch Spritzguss zusammengefügt sind.

Das Durchtrennen der Beschichtung 140 erfolgt beispielhaft in einem gemeinsamen Arbeitsgang mit dem Einbringen der Oberflächenstruktur 150 mittels desselben gepulsten Lasers, kann jedoch, wie oben erwähnt, in einem separaten Arbeitsschritt erfolgen. Eine in das Material eingetragene Laserleistung ist dabei so gewählt, dass nur die Beschichtung 140 durchtrennt, nicht aber das Material der ersten Komponente 110 und der zweiten Komponente 120 beschädigt wird.

Die Beschichtung 140 wird so in eine auf die erste Oberfläche aufgebrachte erste Beschichtung 141 und eine auf die zweite Oberfläche aufgebrachte zweite Beschichtung 142 geteilt. Sind die erste Komponente 110 und die zweite Komponente 120 zum Formen des Formteils 200 zusammengefügt, so erstreckt sich der Grenzbereich 130 auf den Bereich zwischen der ersten Beschichtung 141 und der zweiten Beschichtung 142.

Durch das Durchtrennen gemäß dem fünften Schritt des Verfahrens kann erreicht werden, dass ein Abstand 131 (erkennbar in Fig. 3) zwischen der ersten Beschichtung 141 und der zweiten Beschichtung 142 überall im Grenzbereich 130 nicht mehr als 100 µm, vorzugsweise nicht mehr als 20 µm, insbesondere nicht mehr als 10 µm beträgt. Genauer gesagt beträgt jeder Abstand zwischen je einem ersten Punkt einer ersten Kantenlinie 132 der ersten Beschichtung 141 im Grenzbereich 130 und einem dem ersten Punkt am nächsten liegenden zweiten Punkt einer zweiten Kantenlinie 133 der zweiten Beschichtung 142 im Grenzbereich 130, nicht mehr als 100 µm, vorzugsweise nicht mehr als 20 µm, insbesondere nicht mehr als 10 µm. Unter einer Kantenlinie wird dabei die durch das Durchtrennen entstandene, von der Oberfläche 111, 121 der jeweiligen Komponente 110, 120 des Formwerkzeugs 100 beabstandete Linie am Rand der Oberfläche der Beschichtung 140 verstanden. Ein ggf. wahrnehmbares Linienartefakt am Formteil 200 kann so vermieden bzw. minimiert werden.

Das Formteil 200 ist beispielhaft ein Fahrzeugteil, etwa eine strukturelle Komponente oder eine Verblendung/Verkleidung für ein Armaturenbrett, eine Konsole, ein Tür- oder Dachmodulen, oder ein Bedienelement. Auch andere Formteile, insbesondere mit texturierten/strukturierten Sichtoberflächen, können auf die beschriebene Weise gefertigt werden.

### Liste der Bezugszeichen:

100 Formwerkzeug,
110 erste Komponente,
111 erste Oberfläche,
120 zweite Komponente,
121 zweite Oberfläche,
130 Grenzbereich,
131 Abstand,
132 erste Kantenlinie,
133 zweite Kantenlinie,
140 Beschichtung,
141 erste Beschichtung,
142 zweite Beschichtung,
150 Oberflächenstruktur,
151 vertiefte Bereiche,
152 erhabene Bereiche,
200 Formteil,
210 erster Bereich,
220 zweiter Bereich,
230 strukturierte Formteiloberfläche.

## Patentansprüche

1. Verfahren zum Herstellen eines Formwerkzeugs (100) zum Formen eines Formteils (200), insbesondere eines Formwerkzeugs (100) für eine Spritzguss-Vorrichtung, wobei das Verfahren umfasst
Bereitstellen einer ersten Komponente (110) des Formwerkzeugs (100) mit einer ersten Oberfläche (111), die zum Formen eines ersten Bereichs (210) des Formteils (200) eingerichtet ist, und einer zweiten Komponente (120) des Formwerkzeugs (100) mit einer zweiten Oberfläche (121), die zum Formen eines zweiten Bereichs (220) des Formteils (200) eingerichtet ist,
Zusammenfügen der ersten Komponente (110) und der zweiten Komponente (120), so dass ein Grenzbereich (130) zwischen der ersten Oberfläche (111) und der zweiten Oberfläche (121) ausgebildet wird,
Aufbringen einer Beschichtung (140) auf die erste Oberfläche (111) und die zweite Oberfläche (121), so dass der Grenzbereich (130) von der Beschichtung (140) überdeckt ist,
Durchtrennen der Beschichtung (140) entlang des Grenzbereichs (130).

2. Verfahren nach Anspruch 1, wobei die Beschichtung (140) ein keramisches Material, insbesondere einen Keramik-Kunstharz-Verbundwerkstoff, umfasst oder aus diesem besteht.

3. Verfahren nach einem der vorhergehenden Ansprüche, wobei die Beschichtung (140) mittels eines gepulsten Lasers durchtrennt wird.

4. Verfahren nach Anspruch 3, wobei eine Pulsdauer eines Betriebs des gepulsten Lasers im Bereich (210) von 1 fs bis 1 ps liegt.

5. Verfahren nach einem der vorhergehenden Ansprüche, ferner umfassend: Einbringen einer Oberflächenstruktur (150), umfassend vertiefte Bereiche (151) und erhabene Bereiche (152), in die Beschichtung (140).

6. Verfahren nach Anspruch 5, wobei die Oberflächenstruktur (150) eine Körnung und/oder eine lederähnliche Struktur umfasst.

7. Verfahren nach Anspruch 5 oder 6, wobei die Oberflächenstruktur (150) mittels eines gepulsten Lasers in die Beschichtung (140) eingebracht wird.

8. Verfahren nach einem der Ansprüche 5 bis 7, soweit er auf Anspruch 3 rückbezogen ist, wobei das Durchtrennen der Beschichtung (140) und das Einbringen der Oberflächenstruktur (150) mittels desselben gepulsten Lasers erfolgt.

9. Formwerkzeug (100), hergestellt nach dem Verfahren gemäß einem der vorhergehenden Ansprüche.

10. Formwerkzeug (100) zum Formen eines Formteils (200), insbesondere Formwerkzeug (100) für eine Spritzguss-Vorrichtung, umfassend
eine erste Komponente (110) mit einer ersten Oberfläche (111), die zum Formen eines ersten Bereichs (210) des Formteils (200) eingerichtet ist, und einer auf die erste Oberfläche (111) aufgebrachten ersten Beschichtung (141),
eine zweite Komponente (120) mit einer zweiten Oberfläche (121), die zum Formen eines zweiten Bereichs (220) des Formteils (200) eingerichtet ist, und einer auf die zweite Oberfläche (121) aufgebrachten zweiten Beschichtung (142),
wobei die erste Komponente (110) und die zweite Komponente (120) zum Formen des Formteils (200) zusammenfügbar sind, so dass zwischen der ersten Beschichtung (141) und der zweiten Beschichtung (142) ein Grenzbereich (130) ausgebildet wird,
wobei ein Abstand zwischen der ersten Beschichtung (141) und der zweiten Beschichtung (142) überall im Grenzbereich (130), insbesondere jeder Abstand zwischen je einem ersten Punkt einer Kantenlinie der ersten Beschichtung (141) im Grenzbereich (130) und einem dem ersten Punkt am nächsten liegenden zweiten Punkt einer Kantenlinie der zweiten Beschichtung (142) im Grenzbereich (130), nicht mehr als 100 µm, vorzugsweise nicht mehr als 20 µm, insbesondere nicht mehr als 10 µm beträgt.

11. Formteil, insbesondere Fahrzeugteil, hergestellt unter Verwendung des Formwerkzeugs (100) nach einem der Ansprüche 9 und 10.
